Europäisches Patentamt

European Patent Office

Office européen des brevets

(19)

(11) Publication number: **0 321 584**
**A1**

(12) **EUROPEAN PATENT APPLICATION**

published in accordance with Art. 158(3) EPC

(21) Application number: 88906038.0

(22) Date of filing: 25.06.88

Data of the international appli-
cation taken as a basis:

(86) International application number:
**PCT/JP 88/00636**

(87) International publication number:
**WO 88/10473 (29.12.88 88/28)**

(51) Int. Cl.⁴: **G 06 F 15/68**

(30) Priority: 25.06.87 JP 156427/87

(43) Date of publication of application: 28.06.89
**Bulletin 89/26**

(84) Designated Contracting States: **DE FR GB**

(71) Applicant: **FANUC LTD, 3580, Shibokusa Aza-Komanba
Oshino-mura, Minamitsuru-gun Yamanashi 401-05 (JP)**

(72) Inventor: **MURAOKA, Yutaka Fanuc Dai 3 Virakaramatsu,
3527-1, Shibokusa Oshino-mura, Minamitsuru-gun
Yamanashi 401-05 (JP)**

(74) Representative: **Billington, Lawrence Emlyn et al,
HASELTINE LAKE & CO Hazlitt House 28 Southampton
Buildings Chancery Lane, London WC2A 1AT (GB)**

(54) **SYSTEM FOR CALCULATING SUM OF PRODUCTS.**

(57) A system for calculating a sum of products, which enables
a product sum arithmetic unit to be constructed at a low price.
When an n/d number of processors in a processor array (2)
receive the corresponding data of a series of data from a
memory (1), the individual data are multiplied by a given coeffi-
cient among n coefficients, and an output equal to the sum of
products is added in an adder to a value read from the corres-
ponding address of an intermediate storage (4) and is stored in
the intermediate storage. The input data are then shifted to exe-
cute the similar processing. When the processing for the whole
series of data in the memory is completed, a similar process is
performed, consisting in reading from the intermediate storage
and writing the output of the adder with different coefficients at
intervals of n/d using the processor array for the same series of
data to obtain a sum of products.

- 1 -

SPECIFICATION

SYSTEM FOR CALCULATION OF SUM OF PRODUCTS

TECHNICAL FIELD

The present invention relates to a system for calculation of sum of products in which data items of a time- or space-based array such as image data are multiplied individually by coefficients corresponding to a distribution curve and then the products obtained are added together.

BACKGROUND ART

There has been proposed a system for calculation of sum of products, such as a convolution integrator used for enhancement of the sharpness of image data, spatial filtering and the like, wherein $n$ data items are sequentially fetched from a time- or space-based array of data and are multiplied individually by coefficients corresponding to a distribution curve, and the $n$ data multiplied by the coefficients are summed up to be output. In such system, products of the $n$ data items and the respective coefficients are obtained at one time, and added together, and the sum of the products is output. Subsequently, the data items are shifted, so that the shifted $n$ data items are multiplied by the corresponding coefficients. The obtained products are added together, and the sum is output. The operation described is executed successively. In this case, the $n$ data items need to be multiplied at one time by their corresponding coefficients. To this end, an arithmetic unit for sum-of-products operation of a systolic array type is used which includes $n$ processors for multiplication arranged in parallel.

Let it be assumed that $n$ data items are fetched

- 2 -

sequentially from a sequence of data $a_1$, $a_2$, $a_3$, ... $a_m$, ... and are multiplied at one time by coefficients $k_1$ to $k_n$, respectively, the products obtained are added together, and that the sum is delivered as output Y. In this case, the output Y of the arithmetic unit for sum-of-products operation is as follows:

Output Y1 obtained first is

$$Y1 = k_1 a_1 + k_2 a_2 + k_3 a_3 \cdots k_n a_n \qquad ---(1).$$

Second output Y2 produced next is

$$Y2 = k_1 a_2 + k_2 a_3 + k_3 a_4 \cdots k_n a_{n+1} \qquad ---(2),$$

and i-th output Yi is

$$Yi = k_1 a_i + k_2 a_{i+1} + k_3 a_{i+3} \cdots k_n a_{n+i-1} \qquad ---(3).$$

Since the products of the $\underline{n}$ data items and their respective coefficients must be obtained at the same time, a systolic array is employed in which $\underline{n}$ processors serving as multipliers are parallel-connected.

The processors used as multipliers, however, are required to perform high-speed operation and therefore expensive. Consequently, there is a problem in that if the number of coefficients to be multiplied is large, the arithmetic unit required for sum-of-products operation is correspondingly costly.

## DISCLOSURE OF THE INVENTION

It is therefore an object of the present invention to provide a system for calculation of sum of products which is reduced in number of the processors used as multipliers and accordingly can provide an inexpensive arithmetic unit for sum-of-products operation.

To achieve the object, the present invention provides a system for calculation of sum of products in which $\underline{n}$ coefficients are multiplied by corresponding data items and the products obtained are added together. The system comprises a processor array

- 3 -

including n/d processors to which data items of a data sequence are input while being shifted and which multiply the input data items individually by coefficients, the processor array adding together the outputs of the processors and outputting the sum obtained, an adder for adding the output of the processor array to a value stored in that address of an intermediate storage which corresponds to a respective shift, and the intermediate storage for storing the output of the adder in an address thereof corresponding to a respective shift. The same data sequence is input to the processor array $d$ times, and the coefficients set in the processors are varied to respective predetermined values each time the data sequence is input, read of data from the intermediate storage and write of the output supplied from the adder being delayed by n/d cycles each time the data sequence is input, and the output of the adder being output as the result of addition of the products of the $n$ coefficients and the data items.

Now, let it be assumed that the sequence of data to be processed is $a_1$, $a_2$, $a_3$, ..., and that the number of processors in the processor array is n/d = m. According to the present invention, first, coefficients $k_1$, $k_2$, ... $k_m$ are set in the respective processors, and the data sequence is input (hereinafter the term "pass" is used to indicate inputting of the data sequence $a_1$, $a_2$, $a_3$, ... to all the processors). Output $P_{1-1}$ of the aforementioned adder in the first cycle is as follows. (Meanwhile, the values stored at the individual addresses of the intermediate storage have been cleared to "zero" by initialization.)

$$P_{1-1} = k_1 a_1 + k_2 a_2 + ... + k_m a_m$$

The output $P_{1-1}$ is stored in the intermediate

- 4 -

storage at a corresponding address A1. In the subsequent cycle after a shift of the input data, the adder delivers output $P_{1-2}$:

$$P_{1-2} = k_1 a_2 + k_2 a_3 + \ldots + k_m a_{m+1}.$$

This output is stored in the corresponding address A2 of the intermediate storage. This operation is repeated thereafter and, in the i-th cycle, the adder produces output $P_{1-i}$:

$$P_{1-i} = k_1 a_i + k_2 a_{i+1} + \ldots + k_m a_{i+m-1}.$$

The value $P_{1-i}$ is stored in the intermediate storage at the address Ai.

Upon completion of all the necessary shifts of the data sequence $a_1$, $a_2$, ... which is to be subjected to sum-of-products operation, coefficients $k_{m+1}$ to $k_{2m}$ are set in the corresponding processors of the processor array, and the data sequence $a_1$, $a_2$, ... is again input to the processor array so that the above-described operation is executed. In this second pass, read and write of data from and into the intermediate storage are delayed by $\underline{m}$ cycles. That is, from the (m+1)th shift, data starts to be read from the intermediate storage, sequentially from the address A1. The data read from the address A1 is added to the value output from the processor array at the time of the (m+1)th shift. The sum obtained is stored in the storage, sequentially from the address A1.

More specifically, in the second pass, output $P_{2-1}$ of the adder in the (m+1)th shift is

$$P_{2-1} = P_{1-1} + k_{m+1} a_{m+1} + k_{m+2} a_{m+2} + \ldots k_{2m} a_{2m}$$
$$= k_1 a_1 + k_2 a_2 + \ldots + k_{2m} a_{2m}.$$

The output in the next cycle is

$$P_{2-2} = P_{1-2} + k_{m+1} a_{m+2} + k_{m+2} a_{m+3} + \ldots k_{2m} a_{2m+1}$$
$$= k_1 a_2 + k_2 a_3 + \ldots + k_{2m} a_{2m+1},$$

and the output obtained in the i-th cycle is

$$P_{2-i} = P_{1-i} + k_{m+1}a_{m+i} + k_{m+2}a_{m+i+1} \cdots$$
$$+ k_{2m}a_{2m+i-1}$$
$$= k_1a_1 + k_2a_{i+1} + \cdots + k_{2m}a_{2m+i-1}.$$

These outputs $P_{2-2} \cdots P_{2-i} \cdots$ of the adder are respectively stored at the addresses A2 ... Ai ... of the intermediate storage.

The above-described operation is repeated thereafter and, at the time of the last data input, i.e., in the d-th pass, coefficients $k_{n-m+1}$, $k_{n-m+1}$ $\cdots$ $k_n$ are set in the respective processors of the processor array (since dm = n, $\underline{m}$ coefficients are set in one pass, and accordingly in the d-th pass, coefficient $k_{dm} = kn$ is set in the last processor of the processor array). In this case, read and write of data from the intermediate storage is delayed by $(d-1)m$ cycles. Thus, it is from the $(d-1)m+1$ shift that data starts to be read from the intermediate storage, sequentially from the address A1. The read data is added to the output of the processor array, and the sum is output. Accordingly, output Y1 obtained first is

$$Y1 = P_{d-1} = P_{(d-1)-1} + k_{n-m+1}a_{(d-1)m+1}$$
$$+ k_{n-m+2}a_{(d-m)+2} \cdots k_na_{(d-1)m+m}$$
$$= k_1a_1 + k_2a_2 \cdots + k_{(d-1)m}a_{(d-1)m}$$
$$+ k_{n-m}a_{(d-1)m+1} \cdots + k_na_{(d-1)m+m}$$
$$= k_1a_1 + k_2a_2 + \cdots k_{n-m}a_{n-m} + k_{n-m+1}a_{n-m+1} \cdots$$
$$+ k_na_n$$
$$= k_1a_1 + k_2a_2 + \cdots + k_na_n \qquad ---(4).$$

Output Yi obtained in the i-th cycle is given in the following equation (5):

$$Yi = P_{d-i} = P_{(d-1)-i} + k_{n-m+1}a_{(d-1)m+i} +$$
$$k_{n-m+2}a_{(d-1)m+i+1} + \cdots k_na_{(d-1)m+m+i-1}$$
$$= k_1a_i + k_2a_{i+1} \cdots k_na_{n+i-1} \qquad ---(5).$$

The above equations (4) and (5) are respectively equal to equations (1) and (3). This means that a sum-

- 6 -

of-products operation was performed by multiplying $\underline{n}$ data items, fetched sequentially from the data sequence, respectively by the coefficients $k_1$ to $k_n$ while shifting the data items, and by summing up the products obtained.

As described, according to the present invention, a sum-of-products operation can be performed with processors whose number is smaller than the number of data items to be subjected to sum-of-products operation (the number of the processors is a measure of the number of the data items). Thus, the processors used for multiplication, which are costly, can be reduced in number, and sum-of-products operations can be executed with an inexpensive unit.

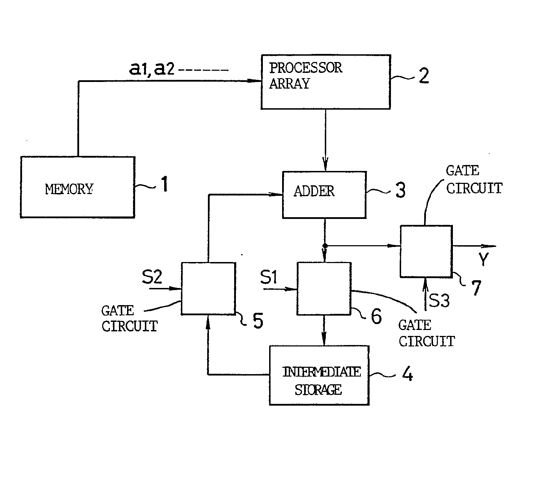

BRIEF DESCRIPTION OF THE DRAWING

The accompanying drawing of figure is a block diagram illustrating a principal part of an apparatus to which is applied a sum-of-products calculation system according to an embodiment of the present invention.

BEST MODE OF CARRYING OUT THE INVENTION

In the accompanying drawing, reference numeral 1 denotes a memory, such as a dynamic RAM or the like, which stores a time- or space-based array of data to be processed, such as image data. In the case of image data, for example, 256 memory cells each for storing 8-bit data corresponding to one picture element are assigned for one scanning of an object by a CCD camera or the like, and 256 $\times$ 256 memory cells in total are provided for 256 scannings. Designated at 2 is a processor array which includes a multiplicity of processors serving as multipliers for multiplying items of data 1 individually by coefficients corresponding to a distribution curve. The processor array 2 comprises at least shift registers for sequentially shifting data 1 to be processed, a coefficient memory area for storing the coefficients, coefficient switching means for switching the coefficients, and an adder for summing up the outputs of the processors, i.e., the products of the data items and the coefficients. Reference numeral 3 designates an adder for adding the output of the processor array 2, i.e., the sum of the products of the data items and the coefficients, to the data stored in an intermediate storage 4. The intermediate storage 4 serves to temporarily store data which is obtained in intermediate processes prior to output of the result Y of a sum-of-products operation. Reference numerals 5, 6 and 7 denote gate circuits. Processes such as input of data to the processor array 2 from the data 1, shifting, multiplication and addition of data and switching of the coefficients in the processor array 2, control of the gate circuits 5, 6 and 7, control of data write and read in and from the intermediate storage 4 are executed by a control apparatus, not shown, in accordance with microprogram control.

Let it be assumed that a sum-of-products operation is performed on a sequence of data items, for example, in the case of the image data mentioned above, a data sequence $a_1$, $a_2$, ... corresponding to 256 picture elements for one scanning, by multiplying $n$ data items individually by coefficients $k_1$ to $k_n$ corresponding to a distribution curve while shifting the data sequence, and by summing up the products obtained to produce the output Y, as shown in equations (3) and (5).

$$Yi = k_1 a_i + k_2 a_{i+1} + \cdots k_n a_{n+i-1}$$
$$(i = 1, 2, 3, \ldots)$$

According to the present invention, the number $m$ of the

- 8 -

processors used for multiplication is set to n/d (where $d$ is a measure of $n$) and the data sequence is passed (input) $d$ times. In this embodiment, explanation is given on the assumptions that $n = 4$, $d = 2$, and $m = 4/2 = 2$ and accordingly the number of the processors in the processor array 2 is 2. Four data items $a_i$, $a_{i+1}$, $a_{i+2}$, $a_{i+3}$ ($i = 1, 2, 3, \ldots$) are multiplied individually by coefficients $k_1$, $k_2$, $k_3$ and $k_4$, and the products obtained are added together, thereby performing a sum-of-products operation as shown in equation (6).

$$Y_i = k_1 a_i + k_2 a_{i+1} + k_3 a_{i+2} + k_4 a_{i+3} \qquad ---(6)$$

First, the coefficients $k_1$ and $k_2$ are set respectively in the two processors of the processor array 2, and the data sequence $a_1$, $a_2$, $\ldots$, which is to be subjected to a sum-of-products operation, is sequentially input to the processor array from the memory 1 while being shifted. In the case where data of 256 picture elements $a_1$-$a_{256}$ is input to the processor array, for example, first, data items $a_1$ and $a_2$ are input to the two processors of the processor array 2 to be multiplied by the coefficients $k_1$ and $k_2$ respectively set in the processors. The obtained products $k_1 a_1$ and $k_2 a_2$ are added together and output. The output $k_1 a_1 + k_2 a_2$ is applied to the adder 3, to be added to the data from the intermediate storage 4. In the first pass, however, the gate circuits 5 and 7 are closed, and only the gate circuit 6 is opened with application of a signal S1 from the control apparatus of a microprogram control type. As a result, the adder 3 delivers the output $K_1 a_1 + k_2 a_2$ of the processor array 2 as its output $P_{1-1}$.

$$P_{1-1} = k_1 a_1 + k_2 a_2 \qquad ---(7)$$

The output $P_{1-1}$ is delivered, through the gate circuit 6, to the intermediate storage and written in the address A1.

Then, the data is shifted so that data items $a_2$ and $a_3$ are input to the respective processors of the processor array 2 and multiplied by the coefficients $k_1$ and $k_2$, respectively. The products obtained are added together, and the sum is output from the processor array 2. Since at this time the adder 3 has no data input from the intermediate storage 4, it delivers output $P_{1-2}$, shown in equation (8), which is stored at the address A2 of the intermediate storage 4.

$$P_{1-2} = k_1 a_2 + k_2 a_3 \qquad ---(8)$$

In this manner, the data items $a_1$, $a_2$, ... are multiplied sequentially by the coefficients $k_1$ and $k_2$ as they are shifted, and the sum of the two products is stored in the corresponding address of the intermediate storage 4. Consequently, in the i-th cycle, the output $P_{1-i}$ of the adder is

$$P_{1-i} = k_1 a_i + k_2 a_{i+1} \qquad ---(9).$$

This output is stored at the address Ai of the intermediate storage 4.

When all the data items to be subjected to sum-of-products operation are passed once to the processor array, for example, when image data corresponding to all of the 256 picture elements is passed, calculated values $P_{1-1}$ to $P_{1-256}$, obtained by the sum-of-products operations of the first pass, are stored respectively in the addresses A1 to A256 of the intermediate storage 4. (In practice, the calculated value $P_{1-256}$ is not stored because doing so is meaningless.)

Subsequently, coefficients $k_3$ and $k_4$ are set in the respective processors of the processor array, and the same data sequence is passed to the processor array 2. In this case, the output of the processor array 2 in the first cycle is $k_3a_1 + k_4a_2$, which is input to the adder 3. At this time, all the gate circuits are closed so that the output $P_{2-1} = k_3a_1 + k_4a_2$ of the adder 3 is neither input to the intermediate storage 4 nor delivered as the output Y. Then, the data is shifted and, also in this cycle, the output $P_{2-2} = k_3a_2 + k_4a_3$ of the adder is not input to the intermediate storage 4 or delivered as the output Y. From the third cycle delayed by two cycles, i.e., from the cycle delayed by the number of cycles equal to the number ($m = 2$) of the processors in the processor array 2, the control apparatus delivers signals S2 and S3 to open the gate circuits 5 and 6. Consequently, in this third cycle, the data $P_{1-1} = k_1a_1 + k_2a_2$ stored in the address A1 of the intermediate storage 4, shown in equation (7), is applied to the adder 3.

As a result, the adder 3 adds the sum of products, $k_3a_3 + k_4a_4$, output from the processor array 2, to the value $P_{1-1}$ which is obtained by the sum-of-products operation performed in the first cycle of the first pass. The resulting sum is delivered as the output Y1 through the gate circuit 7.

$$Y1 = P_{2-1} = P_{1-1} + k_3a_3 + k_4a_4$$
$$= k_1a_1 + k_2a_2 + k_3a_3 + k_4a_4 \quad ---(10)$$

In the subsequent cycle, the output $k_3a_4 + k_4a_5$ of the processor array 2 is added to the data $P_{1-2}$ stored in the address A2 of the intermediate storage 4, and the sum is delivered as output Y2.

$$Y2 = P_{2-2} = P_{1-2} + k_3a_4 + k_4a_5$$
$$= k_1a_2 + k_2a_3 + k_3a_4 + k_4a_5 \quad ---(11)$$

Similarly, in the i-th cycle, the output $k_3a_{i+2} + k_4a_{i+3}$ of the processor array 2 is added to the data $P_{1-i}$ stored in the address Ai of the intermediate storage 4. The resulting sum is delivered as output

- 11 -

Yi.

$$Yi = P_{2-i} = P_{1-i} + k_3 a_{i+2} + k_4 a_{i+3}$$
$$= k_1 a_i + k_2 a_{i+1} + k_3 a_{i+2} + k_4 a_{i+3}$$
$$---(12)$$

$$(i = 1, 2, \ldots)$$

It is noted that equation (12) is equivalent to equation (6). This indicates that the four data items $a_i$, $a_{i+1}$, $a_{i+2}$ and $a_{i+3}$ are respectively multiplied by the coefficients $k_1$, $k_2$, $k_3$ and $k_4$ ($i = 1, 2, \ldots$, and in the case of the above-mentioned image data corresponding to 256 picture elements, $i = 1, \ldots 253$, since Y254 to Y256 are meaningless) and the resulting sum of the products is output in each cycle.

The foregoing embodiment is explained on the assumptions that the number $n$ of data items to be subjected to sum-of-products operation is 4, the number $m$ of the processors is 2, and that the number $d$ of times the data sequence is passed is 2. Let it now be assumed that the number $n$ of the data items is 6, the number $m$ of the processors is 2, and that the number of times $d$ for passing the data sequence is 3. In this case, in the first pass of the data sequence, the sums of products, which are obtained by the processor array 2 and the adder 3, are stored in the intermediate storage sequentially from the address A1. Then, in the second pass, the gate circuits 5 and 6 are opened from the third cycle delayed by the number of cycles equal to the number of the processors, i.e., 2 (= m). Therefore, in the third cycle, the adder 3 adds the output of the processors to the data read from the address A1, and the sum obtained is stored in the same address A1. In the following cycles, the data stored in the intermediate storage is sequentially read out in the order from the address A2, and added to the

- 12 -

corresponding output from the processors of the processor array. The resulting output of the adder 3 is stored in the corresponding address from which data has just been read out. In the third pass of data sequence, the gate circuits 5 and 7 are opened from the cycle further delayed by two cycles, i.e., from the fifth cycle delayed by $m \times 2 = 2 \times 2 = 4$ cycles, such that the stored data is read sequentially from the address A1 and added by the adder 3 to the output from the processor array in each data shift. In this manner, output Y is delivered sequentially.

As will be noted, the number $n$ of data items to be subjected to sum-of-products operation is divided by the number $m$ of processors provided in the processor array 2, and the data sequence is passed $n/m = d$ times. In the first pass of the data sequence, the sum of the products of the data from the processors of the processor array 2 and the respective coefficients is stored in the corresponding address of the intermediate storage 4. In the second pass, read and write of data from and into the address A1 of the intermediate storage 4 are delayed by the number of cycles equal to the number $m$ of the processors. The output of the processor array is added to the data read from the intermediate storage, and the resulting sum is stored in the intermediate storage 4 sequentially from the address A1. In the subsequent passes, read and write of the data from and into the address A1 of the intermediate storage 4 are further delayed by the number of cycles equal to the number of the processors. In the last pass, the output of the adder 3 may be output through the gate circuit 7.

Thus, although the process time is $d$ times longer than that of a sum-of-products calculation system

- 13 -

including processors whose number is equal to the number $\underline{n}$ of data items, the present invention contributes to reducing the number of processors required, which are expensive, to n/d.

- 14 -

C L A I M

A system for calculation of sum of products in which _n_ coefficients are multiplied by corresponding data items and the products obtained are added together, comprising:

a processor array including n/d processors to which data items of a data sequence are input while being shifted and which multiply the input data items individually by coefficients, said processor array adding together the outputs of said processors and outputting the sum obtained;

an adder for adding the output of said processor array to a value stored in that address of an intermediate storage which corresponds to a respective shift; and

the intermediate storage for storing the output of said adder in an address thereof corresponding to a respective shift;

the same data sequence being input to the processor array _d_ times, the coefficients set in said processors being varied to respective predetermined values each time the data sequence is input;

read of data from said intermediate storage and write of the output supplied from said adder being delayed by n/d cycles each time the data sequence is input; and

the output of said adder being output as the result of addition of the products of the _n_ coefficients and the data items.

a1, a2 ------ → PROCESSOR ARRAY ⌇ 2

MEMORY ⌇ 1

ADDER ⌇ 3

GATE CIRCUIT

Y

S2 → GATE CIRCUIT ⌇ 5

S1 → ⌇ 6 GATE CIRCUIT

S3 ⌇ 7

INTERMEDIATE STORAGE ⌇ 4

# INTERNATIONAL SEARCH REPORT

International Application No  PCT/JP88/00636

## I. CLASSIFICATION OF SUBJECT MATTER (if several classification symbols apply, indicate all) ⁶

According to International Patent Classification (IPC) or to both National Classification and IPC

Int.Cl⁴   G06F15/68

## II. FIELDS SEARCHED

Minimum Documentation Searched ⁷

| Classification System | Classification Symbols |
|---|---|
| IPC | G06F15/66-15/68 |

Documentation Searched other than Minimum Documentation
to the Extent that such Documents are Included in the Fields Searched ⁸

Jitsuyo Shinan Koho              1971 - 1988
Kokai Jitsuyo Shinan Koho        1971 - 1988

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 58-1275 (Hitachi, Ltd.) 6 January 1983 (06. 01. 83) (Family: none) | 1 |
| Y | JP, A, 57-209564 (Hitachi, Ltd.) 22 December 1982 (22. 12. 82) & EP, A2, 68358 & EP, A3, 68358 & US, A, 4550437 | 1 |
| A | JP, A, 58-181171 (Hitachi, Ltd.) 22 October 1983 (22. 10. 83) (Family: none) | 1 |

* Special categories of cited documents: ¹⁰

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance: the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| August 30, 1988 (30. 08. 88) | September 12, 1988 (12. 09. 88) |
| International Searching Authority | Signature of Authorized Officer |
| Japanese Patent Office | |

Form PCT/ISA/210 (second sheet) (January 1985)